# EUROPEAN PATENT APPLICATION

(11) **EP 1 849 404 A1**
(43) Date of publication of application: **31.10.2007**
(21) Application number: 06712549.2
(22) Date of filing: 30.01.2006
(51) Int. Cl.: A61B 5/00, G06T 1/00, G06T 3/40

(54) **MEDICAL IMAGE SYSTEM**

(30) Priority: 15.02.2005 JP 2005037901
(71) Applicant: Konica Minolta Medical & Graphic, Inc., Tokyo 163-0512 (JP)
(72) Inventor: NAGATSUKA, Sumiya, kawa-machi, Hachioji-shi, Tokyo, 1928505 (JP)
(74) Representative: Roberts, Mark Peter
(86) International application number: PCT/JP2006/301406
(87) International publication number: WO 2006/087895

(57) **Abstract**

In the image processing apparatus relating to the invention, number of pixels P₁ of image data of medical image inputted from an image generating apparatus is compared with number of displayable pixels P₂ of an image displaying apparatus representing an output destination, and when P₁ ≤ P₂ is satisfied, and medial images are displayable as they are on the image displaying apparatus, image data (original image data) are outputted as they are to the image displaying apparatus, after image processing, and when P₁ > P₂ is satisfied, and not all the image data of medial images are displayable on the image displaying apparatus, image data are subsampled so that they may be displayable on the image displaying apparatus representing the destination for output, and both of subsampled image data and original image data are outputted to the image displaying apparatus.

## Description

### TECHNICAL FIELD

The present invention relates to a medical imaging system for generating and outputting medical images used by a medical doctor for image interpretation diagnoses.

### BACKGROUND

In a hospital or between hospitals, there have recently been built medical imaging systems wherein various image-generating apparatuses that photographs a human body to generate digital medical images, such as CT (Computed Tomography), CR (Computed Radiography), FPD (Flat Panel Detector), a supersonic diagnostic equipment and MRI (Magnetic Resonance Imaging), an image processing apparatus that conducts image processing on the generated medical images for attaining efficient image interpretation diagnosis by a medical doctor, a medical image displaying apparatus that displays images which have been subjected to image processing for the image interpretation diagnoses by a medial doctor, an image recording apparatus that records and outputs medical images on a recording medium such as a film and an image server that stores and controls medical images are connected through the communication network.

In the medical imaging system of this kind, it is common to conduct subsampling processing for reducing the number of pixels on image data of medical images in an image processing apparatus to output to an image output apparatus such as an image displaying apparatus and an image recording apparatus, for the purpose of reducing processing time and transfer time of communication network (for example, see Patent Document 1).

However, if the image data are subsampled once in a certain process, a missing part is caused in image information, and it is not possible to restore to the original image. For example, therefore, when conducting subsampling processing on image data to output so that the number of pixels of the image data matches with the number of displayable pixels for displaying images on an image displaying apparatus having the number of displayable pixels that is smaller than that of medical images generated by an image generating apparatus, it is impossible to partially enlarge an image of the original resolution, in the case of diagnosing by enlarging the image partially for displaying, which has been a problem. Further, even in the case of outputting a hard copy of an image on an image recording apparatus having the resolution identical to that of the generated medical image, after outputting and an image interpretation diagnosis by conducting subsampling processing on image data so that the number of pixels of the image data matches with the number of displayable pixels of the image displaying apparatus having the number of displayable pixels smaller than that of the generated medial images, it is impossible to record an image of the original resolution on a film, and accuracy of diagnosis is declined, which has been a problem.
[Patent Document 1] Japanese Patent Publication Open to Public Inspection No. 2001-245140

### DISCLOSURE OF THE INVENTION

An objective of the invention is to arrange so that medical images which are free from missing parts of information may be utilized when they are needed, in the medical imaging system.

An embodiment of the invention for attaining the aforesaid objective is represented by a medical imaging system having therein an image generating apparatus that photographs a subject and generates medical image data, an image processing apparatus that conducts image processing on the aforesaid generated medical images and outputs them and an image output apparatus that reproduces and outputs the medical image data subjected to image processing as visible images, wherein, the image processing apparatus conducts subsampling processing on the medical image data in accordance with the number of pixels which can be outputted by the image output apparatus, and outputs subsampled image data by the aforesaid subsampling processing and original image data before subsampling to be stored in the system, in the medical image system wherein the aforesaid items are connected through a communication network.

### BRIEF DESCRIPTION OF THE DRAWINGS

Fig. 1 is a diagram showing the total structure of medical imaging system 100 relating to the invention.
Fig. 2 is a block diagram showing the functional structure of image processing apparatus 2 in Fig. 1.
Fig. 3 is a diagram showing an example of data storing of reference file of number of displayable pixels 251 in Fig. 2.
Fig. 4 is a flow chart showing image data outputting processing implemented by CPU 21 in Fig. 2.
Fig. 5 is a flow chart showing original image data outputting processing implemented by CPU 21 in Fig. 2.
Fig. 6 is a diagram showing the total structure of medical imaging system 200 relating to the invention.

### DESCRIPTION OF SYMBOLS

100: Medical imaging system
1: Image generating apparatus
2: Image processing apparatus
21: CPU
22: Operation section
23: Display section
24: RAM
25: Storing section
26: Communication control section
27: Bus
3: Image displaying apparatus
4: Image recording apparatus
5: Image server

### PREFERRED EMBODIMENT OF THE INVENTION

The aforesaid objectives of the invention are attained by the following structures.
(1) A medical imaging system having therein an image generating apparatus that photographs a subject and generates medical image data, an image processing apparatus that conducts image processing on the generated medical image data to output and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image output apparatus, and the image output apparatus has an image data storage device and stores subsampled image data and original image data outputted from the image processing apparatus in the aforesaid image data storage device.
(2) A medical imaging system having therein an image generating apparatus that photographs a subject and generates medical image data, an image processing apparatus that conducts image processing on the aforesaid generated medical image data to output, an image control apparatus that stores and controls the image-processed medial image data and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image control apparatus, and the image control apparatus stores subsampled image data and original image data outputted from the image processing apparatus to control them.
(3) The medical imaging system described in Item 1 or 2 wherein the image processing apparatus determines timing for outputting the original image data in accordance with the state of use of the communication network line and/or the priority order of the use of the original image data.
(4) The medical imaging system described in Item 1 wherein the image processing apparatus and the image output apparatus are connected by two or more lines each having a different data communication speed, and the image processing apparatus outputs the original image data to the image output apparatus by using a line whose data communication speed is relatively high among two or more lines each having a different data communication speed, and the aforesaid subsampled image data are outputted to the aforesaid image output apparatus by using any other line.
(5) The medical imaging system described in Item 2 wherein the image processing apparatus and the image control apparatus are connected by two or more lines each having a different data communication speed, and the image processing apparatus outputs the original image data to the image control apparatus by using a line whose data communication speed is relatively high among two or more lines each having a different data communication speed, and the aforesaid subsampled image data are outputted to the aforesaid image control apparatus by using any other line.

To solve the aforesaid problems, the system described in Item 1 is represented by a medical imaging system having therein an image generating apparatus that photographs a subject and generates medical image data, an image processing apparatus that conducts image processing on the generated medical image data to output and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image output apparatus, and the image output apparatus has an image data storage device and stores subsampled image data and original image data outputted from the image processing apparatus in the aforesaid image data storage device.

The system described in Item 2 is represented by a medical imaging system having therein an image generating apparatus that photographs a subject and generates medical image data, an image processing apparatus that conducts image processing on the generated medical image data to output, an image control apparatus that stores the image-processed medical image data to control them and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image control apparatus, and the image control apparatus stores subsampled image data and original image data outputted from the image processing apparatus to control them.

The system described in Item 3 is represented by the system described in Item 1 or 2 wherein the image processing apparatus determines timing to output the original image data depending on the state of use of the communication network line and/or the priority order of the use of the original image data.

The system described in Item 4 is represented by the system described in Item 1 wherein the image processing apparatus and the image output apparatus are connected by two or more lines each having a different data communication speed, and the image processing apparatus outputs the original image data to the image output apparatus by using a line whose data communication speed is relatively high among two or more lines each having a different data communication speed, and any other line is used to output the aforesaid subsampled image data to the image output apparatus.

The system described in Item 5 is represented by the system described in Item 2 wherein the image processing apparatus and the image control apparatus are connected by two or more lines each having a different data communication speed, and the image processing apparatus outputs the original image data to the image control apparatus by using a line whose data communication speed is relatively high among two or more lines each having a different data communication speed, and any other line is used to output the aforesaid subsampled image data to the image control apparatus.

The system described in Item 1 is represented by a medical imaging system having therein an image generating apparatus that photographs a subject and generates medical image data, an image processing apparatus that conducts image processing on the generated medical image data to output, and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image output apparatus, while, the image output apparatus stores subsampled image data and original image data outputted from the image processing apparatus in an image data storage device. Therefore, even when medical image data require the subsampling processing, original image data before subsampling also can be preserved on the medical imaging system, which makes it possible to use medical image data which are free from the lack of information.

The system described in Item 2 is represented by a medical imaging system having therein an image generating apparatus that photographs a subject and generates medical image data, an image processing apparatus that conducts image processing on the generated medical image data to output, an image control apparatus that stores the image-processed medical image data to control them and an image output apparatus that reproduces and outputs the image-processed medical image data as a visible image, which are connected to each other through a communication network wherein the image processing apparatus conducts subsampling processing for the medical image data in accordance with the number of pixels capable of being outputted from the image output apparatus, and outputs subsampled image data subjected to the subsampling processing and original image data before subsampling to the image control apparatus, while, the image control apparatus stores subsampled image data and original image data outputted from the image processing apparatus to control them. Therefore, even when medical image data require the subsampling processing, original image data before subsampling also can be preserved on the medical imaging system, which makes it possible to use medical image data which are free from the lack of information.

In the system described in Item 3, the image processing apparatus determines the timing to output original image data depending on the state of use of the communication network line and/or the priority order of the use of the original image data, which solves the problem that necessary transfer of data on the medical imaging system is disturbed by a communication network line which is occupied for a long period of time by transfer of original image data.

In the system described in Item 4, the image processing apparatus and the image output apparatus are connected by two or more lines each having a different data communication speed, and the image processing apparatus uses a line that is relatively high in terms of data communication speed among two or more lines each having a different data communication speed to output original image data to the image output apparatus, and uses either one of other lines to output subsampled image data to the image output apparatus. Therefore, original image data can be outputted at high speed, without affecting the output of subsampled image data.

In the system described in Item 5, the image processing apparatus and the image control apparatus are connected by two or more lines each having a different data communication speed, and the image processing apparatus uses a line that is relatively high in terms of data communication speed among two or more lines each having a different data communication speed to output original image data to the image control apparatus, and uses either one of other lines to output subsampled image data to the image control apparatus. Therefore, original image data can be outputted at high speed, without affecting the output of subsampled image data.

First, the structure of the present embodiment will be described as follows.

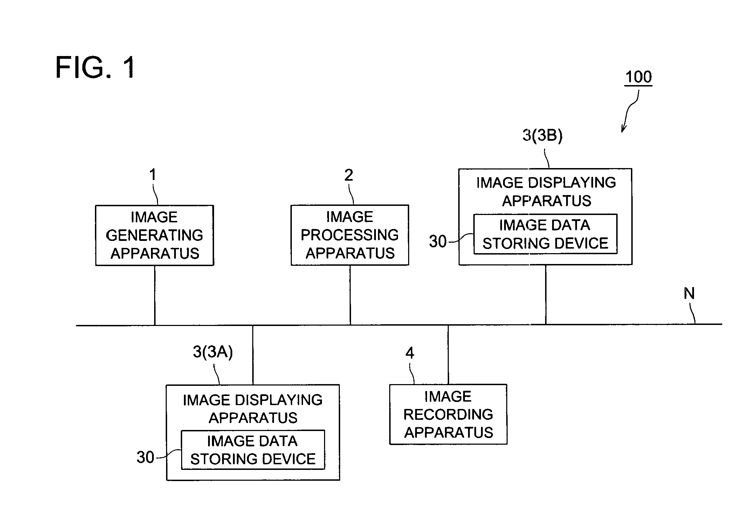

Fig. 1 is a conceptual diagram showing the overall structure of medical imaging system 100 in the present embodiment. In the medical imaging system 100, image generating apparatus 1, image processing apparatus 2, image displaying apparatus 3 and image recording apparatus 4 are connected through communication network N so that each of them can conduct transmitting and receiving with others, as shown in Fig. 1. Incidentally, the number of apparatuses and installation places for them are not limited in particular.

As communication network N, various types of lines such as LAN (Local Area Network), WAN (Wide Area Network) and the Internet can be applied. Further, as a communication system in a hospital, DICOM (Digital Image and Communications in Medicine) standard is used generally, and for the communication between respective apparatuses on the aforesaid communication network N, DICOM MWM (Modality Worklist Management) and DICOM MPPS(Modality Performed Procedure Step) are used.

Image generating apparatus 1 is a modality such as, for example, CR (Computed Radiography), FPD (Flat Panel Detector), CT (Computed Tomography), MRI (Magnetic Resonance Imaging) or a supersonic diagnostic unit, and it photographs a human body, then, converts an image taken through photographing into digital data and generates image data of a medical image. Further, the image generating apparatus 1 has therein operation devices such as a key board, a mouse and a touch panel, and causes image property information for each medical image inputted through these operation devices or through an unillustrated terminal of a reception desk for booking of inspection to accompany the image data as accompanying information, to transmit it to image processing apparatus 2 through communication network N.

The accompanying information includes, for example, patient information concerning a patient as identification information of the photographed patient such as patient ID, a name of a patient, age and gender, and inspection information such as inspection ID for discriminating the inspection, a date of photographing, a region of photographing, photographing conditions (a posture, direction of photographing) and an image generating apparatus (modality type) and further image data information such as the number of pixels of image data, a sampling pitch and the number of bits. Further, in the accompanying information, there is included a flag of the priority order that shows whether an original image data of the medical image is used (is read) based on a priority or not. When the flag of the priority order is "0", in this case, it shows that a priority order for the use of original image data of the medical image is low, and the original image data of the medical image are not needed to be outputted immediately to image displaying apparatus 3 or image recording apparatus 4. When the flag of the priority order is "1", it shows that a priority order for the use of original image data of the medical image is high and the original image data of the medical image are needed to be outputted immediately to image displaying apparatus 3 or image recording apparatus 4.

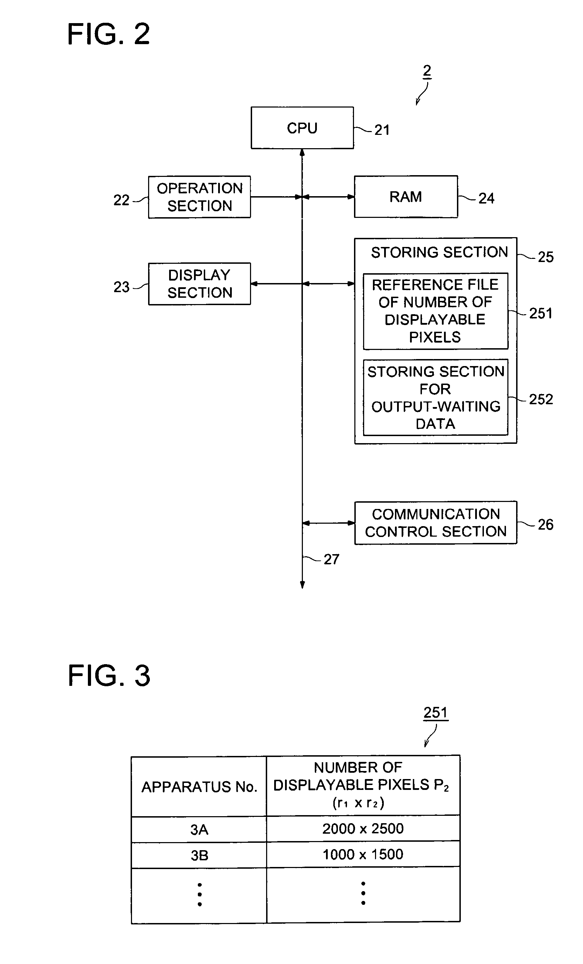

For the purpose of enhancing an efficiency of diagnosis of a medical doctor by reading image data of medical images supplied from image generating apparatus 1, image processing apparatus 2 conducts image processing including gradation processing, frequency processing and dynamic range compression processing, and outputs to image displaying apparatus 3 or image recording apparatus 4. Details will be described later (see Fig. 2).

Image displaying apparatus 3 (3A, 3B) is one equipped with CRT (Cathode Ray Tube) and LCD (Liquid Crystal Display) on which medical images are displayed to be observed by a medical doctor. Image displaying apparatus 3 has image data storing device 30 such as HDD (Hard Disc) and a semiconductor non-volatile memory, which receives data (image data and accompanying information) outputted from image processing apparatus 2 through communication network N, and stores them in image data storing device 30 after correlating the received image data with accompanying information. Further, image displaying apparatus 3 has operating devices such as a mouse and a key board, and when display of medical image is instructed through the operating device, the image displaying apparatus 3 reads out image data of the instructed medical image from image data storing device 30, and displays on the display screen as a visible image.

The image recording apparatus 4 is, for example, a printer of a photothermal silver halide type which records image data inputted from image processing apparatus 2 on a film and reproduces it as a visible image to output it as a hard copy.

In this case, the image displaying apparatus 3 and the image recording apparatus 4 correspond to an image output apparatus of the invention that reproduces and outputs image data which are image-processed in the image processing apparatus 2 as a visible image.

An internal structure of the image processing apparatus 2 will be described as follows.

Fig. 2 is a block diagram showing a functional structure of the image processing apparatus 2. As shown in Fig. 2, the image processing apparatus 2 is composed of CPU 21, operation section 22, display section 23, RAM 24, storing section 25 and communication control section 26 which are connected respectively to bus 27.

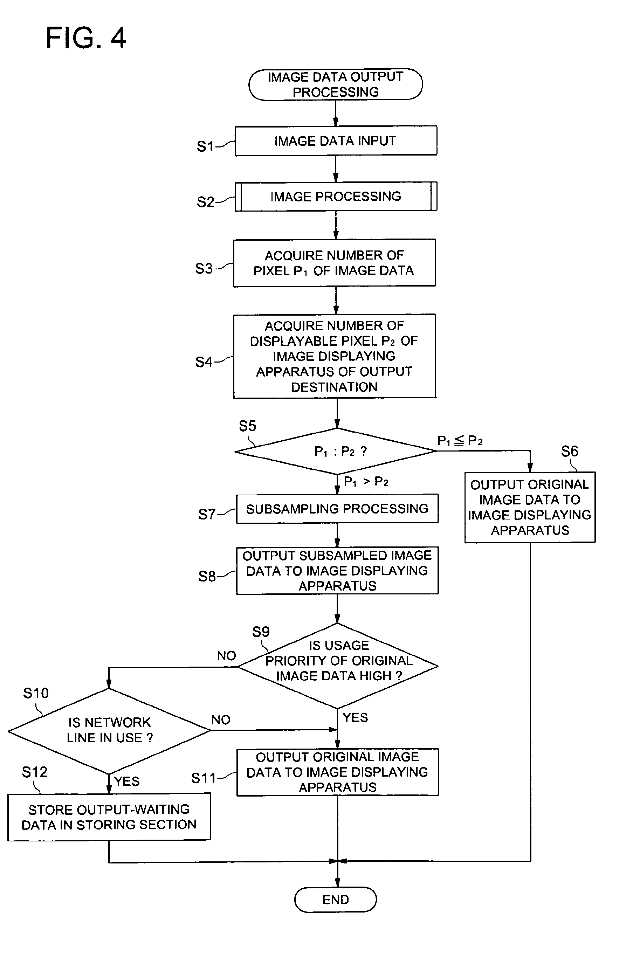

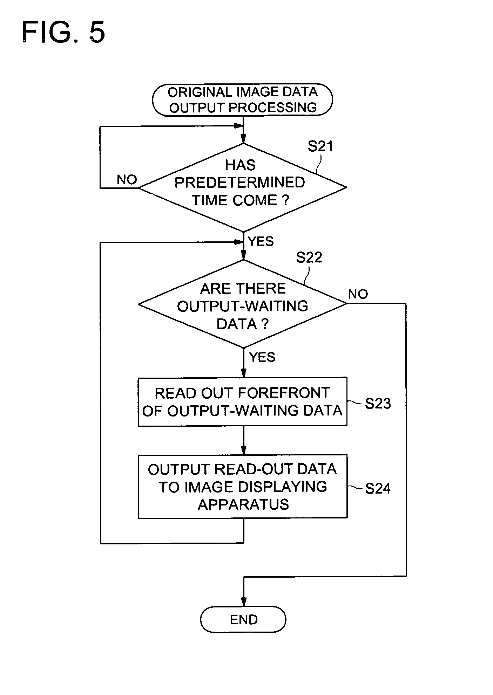

CPU 21 reads out system programs stored in storing section 25, and develops them on a work area formed in RAM 24 to control each section in accordance with the system program. Further, CPU 21 reads out various types of processing programs including an image data output processing program stored in storing section 25 and an original image data output processing program, and various types of application programs to develop them on a work area, and then performs various types of processing including image data output processing (see Fig. 4) which will be described later and original image data output processing (see Fig. 5).

Operation section 22 is composed of a key board that is equipped with a cursor key, a numeral inputting key and various functional keys and of a pointing device such as a mouse, and it outputs instruction signals inputted by key operations for the key board and by mouse operations to CPU 21. Further, the operation section 22 may also be equipped with a touch panel on a display screen of its display section 23. In this case, instruction signals inputted through the touch panel are outputted to CPU 21.

The display section 23 is composed of monitors such as LCD and CRT, and it displays medical images on the display screen, in accordance with instructions of display signals inputted from CPU 21.

In various types of processing performed and controlled by CPU 21, RAM 24 forms a work area for storing various types of programs which are read out from storing section 25 and can be performed by CPU 21, input or output data and parameters.

The storing section 25 is composed of HDD and of non-volatile semiconductor memory, and it stores a system program practiced by CPU 21, various types of processing programs corresponding to the aforesaid system program such as an image data output processing program, an original image data output processing program and an image processing program, various types of application programs and various types of data. These various types of programs are stored in a form of a program code capable of being read, and CPU 21 practices operations in accordance with that program code successively.

Further, the storing section 25 has reference file of number of displayable pixels 251 and storing section for output-waiting data 252, as shown in Fig. 2.

Fig. 3 shows an example of data storage in reference file of number of displayable pixels 251. As shown in Fig. 3, the reference file of number of displayable pixels 251 stores apparatus No. for discriminating each apparatus of image displaying apparatus 3 that is connected to communication network N and displayable pixel number P₂ of that apparatus (displayable pixel number in the row direction r₁ x displayable pixel number in the column direction r₂), by correlating them.

The storing section for output-waiting data 252 stores successively original image data of medical image which has resulted to be waiting for output in image data output processing in Fig. 4.

Communication control section 26 is equipped with interface for communication such as network interface card (NIC; Network Interface Card) and modem, and conducts transmitting and receiving for data mutually with each apparatus connected to communication network N.

Next, operations in the present embodiment will be described.

Fig. 4 is a flow chart showing image data output processing practiced by CPU 21. This processing is one practiced while image displaying apparatus 3 (3A or 3B) is designated as a destination for output of image data, and it is one to be realized by software processing by the cooperation of CPU 21 and image data output processing program stored in storing section 25.

First, image data of medical image (including its accompanying information) are inputted from image generating apparatus 1 through communication control section 26, to be stored in a work area of RAM 24 (step S1). Then, image processing program is read out, and image processing is performed on the inputted image data (step S2).

The image processing includes gradation processing for adjusting contrast of images, frequency processing for adjusting sharpness and dynamic range compression processing for adjusting the image having a broad dynamic range to be within a range of eye-friendly density without lowering contrast on details of the subject.

Then, number of pixels P₁ of medical images is acquired (step S3). The number of pixels P₁ can be acquired from, for example, accompanying information of the image data, and the number of pixels P₁ is composed of information showing number of pixels q₁ in the row direction of medical image and showing number of pixels q₂ in the column direction.

Then, reference file of number of displayable pixels 251 is referred, and number of displayable pixels P₂ of image displaying apparatus 3 representing a destination for output is acquired (step S4). The number of displayable pixels P₂ is composed of information showing the number of displayable pixels r₁ in the row direction and the number of displayable pixels r₂ in the column direction of a display screen of image displaying apparatus 3. After the number of displayable pixels P₂ is acquired, the number of pixels P₁ of image data is compared with the number of displayable pixels P₂ of the image displaying apparatus 3 (step S5). With respect to the comparison between the number of pixels P₁ and the number of pixels P₂, each number of pixels in the row direction is compared with each other and each number of pixels in the column direction is compared with each other. When the number of pixels of image data in each of both direction is not more than the number of displayable pixels on a display screen, namely, when q₁ is not more than r₁ and q₂ is not more than r₂, the result of the comparison is treated to be P₁ ≤ P₂, while, when the number of pixels of image data in at least one direction exceeds the number of displayable pixels on a display screen, namely, when q₁ exceeds r₁, or when q₂ exceeds r₂, the result of the comparison is treated to be P₁ > P₂.

When the result of the comparison in step S5 shows the relationship of P₁ ≤ P₂, namely, when the number of pixels P₁ of image data is not more than the number of displayable pixels P₂ on a display screen of image displaying apparatus 3 representing a destination for output (step S5; P₁ ≤ P₂), original image data (including accompanying information) image-processed in step S2 are outputted to the image displaying apparatus 3 representing a destination for output through communication control section 26 (step S6), and this processing is terminated.

On the other hand, when P₁ > P₂ is shown, namely, when the number of pixels P₁ of image data exceeds the number of displayable pixels P₂ of the destination for output (step S5; P₁ > P₂), image data which have been image-processed in step S2 are subsampled in accordance with the number of displayable pixels P₂ (step S7), and image data (including accompanying information) having been subsampled are outputted to the image displaying apparatus 3 representing a destination for output (step S8). Incidentally, original image data are held on RAM 24 before subsampling operations. Further, "the number of pixels of image data" representing accompanying information outputted in step S8 is changed to the number of pixels of the subsampled image data to be outputted.

Then, the priority order of the use of the original image data of the present medical image is judged whether it is high or not based on the flag of the priority order included in accompanying information, and when the priority order for the use is judged to be high (step S9; YES), original image data including accompanying information are outputted to the image displaying apparatus 3 representing a destination for output through communication control section 26 (step S11), and this processing is terminated.

On the other hand, when the priority order for the use of original image data of the medical image is judged to be low in step S9 (step S9; NO), communication control section 26 detects whether the line of communication network N is occupied or not, and when it is judged not to be in use (step S10; NO), the processing proceeds to Step S11, and original image data including accompanying information are outputted to the image displaying apparatus 3 representing a destination for output through communication control section 26 (step S11), and this processing is terminated. When the line of communication network N is judged to be in use (step S10; YES), original image data including accompanying information are stored in storing section for output-waiting data 252 (step S12), and this processing is terminated.

On the image displaying apparatus 3 under the condition of P₁ > P₂, images are displayed based on subsampled image data if images are not enlarged for image diagnosis. Therefore, when the subsampled image data are outputted to the image displaying apparatus 3, the image diagnosis can be started immediately. Therefore, when the image displaying apparatus 3 under the condition of P₁ > P₂ is the destination for output, it is possible to transmit data collectively during unoccupied hours for the line of communication network N, if the priority order for the use of original image data is low.

Fig. 5 is a flow chart showing original image data output processing carried out by CPU 21. This processing is one practiced at each designated hour, and it is realized by software processing resulting from the cooperation of CPU 21 and of an original image data output processing program stored in storing section 25.

In this case, the designated hour is, for example, the hour during which the line of communication network N is relatively free after the inspection. Though it is time-consuming to transfer original image data because an amount of them is large, this original image data output processing makes it possible to output original image data waiting for output to image displaying apparatus 3 efficiently by utilizing a period of time during which the line of communication network N is relatively free. Incidentally, in the present embodiment, it is assumed that the processing is conducted at each prescribed hour every day.
However, the processing may also be conducted at the prescribed hour on a certain day of the week, or, the processing may also be conducted on a certain day of the week on which no inspection is made, when days of the week on which the inspections are conducted are fixed.

At the prescribed time (step S21; YES), storing section for output-waiting data 252 is referred, and presence or absence of original image data waiting for output is judged, and when the original image data is judged to be present (step S22; YES), original image data of the forefront of output-waiting data (including accompanying information) are read out from the storing section for output-waiting data 252 (step S23), to be outputted to image displaying apparatus 3 through communication control section 26, and to be deleted from the storing section for output-waiting data 252 (step S24), and the processing returns to step S22. Operations for steps S22 - S24 are carried out repeatedly until the moment when output of all original image data stored in the storing section for output-waiting data 252 is completed, and when it is judged that output of all original image data is completed, and output-waiting original image data stored in the storing section for output-waiting data 252 have gone (step S22; NO), the present processing is terminated.

When image data (original image data or subsampled image data) outputted from image processing apparatus 2 by the aforesaid image data output processing are received in image displaying apparatus 3, the received image data are stored in image data storing device 30. Further, medical images are designated because a patient ID and an inspection ID are inputted through an operation device, and when the display instruction is inputted, image data of the designated medical image are searched for, and when a plurality of image data are in existence, image data wherein the number of pixels of image data is within the number of displayable pixels are selected, and medical images are displayed on a display screen based on the selected image data. When enlargement display of the designated medical images are indicated, image data wherein the number of pixels of image data is relatively large are selected when a plurality of image data are in existence, and medical images are enlarged and displayed on a display screen based on the selected image data. Further, when medical images to be recorded on a film are designated by inputting of a patient ID and an inspection ID through an operation device, and an instruction of outputting hard copies is inputted, image data of medical image designated are retrieved from image data storing device 30, and image data wherein the number of pixels of image data is relatively large are read out to be outputted to image recording apparatus 4 when a plurality of image data are in existence.

As explained above, in image processing apparatus 2, number of pixels P₁ of image data of medical image inputted from image generating apparatus 1 is compared with number of displayable pixels P₂ of image displaying apparatus 3 representing an output destination, and when P₁ ≤ P₂ is satisfied, and medial images are displayable as they are on the image displaying apparatus 3, image data (original image data) are outputted as they are to the image displaying apparatus 3, after image processing. When P₁ > P₂ is satisfied, and not all the image data of medial images are displayable on the image displaying apparatus 3, image data are subsampled so that they may be displayable on the image displaying apparatus 3 representing the destination for output, and both of subsampled image data and original image data are outputted to the image displaying apparatus 3. On the image displaying apparatus 3, image data outputted from image processing apparatus 2 are stored in image data storing device 30.

Therefore, even when image data of medical image need subsampling processing, original image data before subsampling also can be held on medial imaging system 100. As a result, when medical images need to be enlarged and displayed partially after subsampling processing for diagnosis, or when a hard copy of images needs to be outputted from image recording apparatus 4 capable of outputting at the same resolution as in the original image of medical images, for example, it is possible to display medical images and to output hard copies at the resolution identical to that at the time of generation of medical images, by using original image data having no lacks of information.

Further, for the original image data having a large quantity of data which are time-consuming to be transferred, those having no higher priority order for the use are transferred when the line of communication network N is not occupied, which eliminates the problem that the line of communication network N is occupied for a long time by the transfer of original image data, and that necessary data transfer is disturbed.

Incidentally, in the aforesaid embodiment, there has been described an example wherein image data which have been subjected to image processing are outputted from image processing apparatus 2 to image displaying apparatus 3. However, when the number of pixels which can be outputted by image recording apparatus 4 is limited, it is also possible to conduct the processing that is the same as the aforesaid image data output processing and as the original image data output processing, when outputting from the image processing apparatus 2 to the image recording apparatus 4. In this case, original image data can be held on medical imaging system 100, by providing an image data storing device on image recording apparatus 4 and by storing image data outputted from image processing apparatus 2 in the image data storing device.

Variations 1 and 2 of the aforesaid embodiment will be described as follows.

### (Variation 1)

First, the structure of Variation 1 will be described.

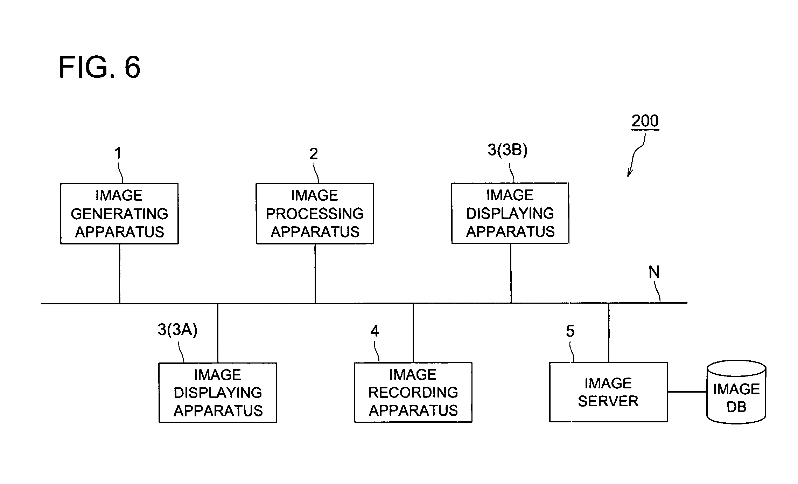

Fig. 6 is a conceptual diagram showing an overall structure of medical imaging system 200 of a variation example. The medical imaging system 200 is of the structure wherein image server 5 is provided on the aforesaid medical imaging system 100.

The image server 5 is an image control apparatus that is equipped with image DB (data base), and preserves image-processed medical image data outputted from image processing apparatus 2 to the image DB to control them, and delivers medical image data thus stored to various types of apparatuses connected to communication network N.

In the medical imaging system 200, image data which have been subjected to image processing by image processing apparatus 2 are outputted to image server 5 through communication network N once, and are stored in image DB. When image data of medical image are required by image displaying apparatus 3, image data are transmitted to the image displaying apparatus 3, by image server 5, complying with the requirement.

Namely, in the image data output processing of image processing apparatus 2, image server 5 serves as a destination for output of image data. The operations of image data output processing are substantially the same as those described in Fig. 4. Number of pixels P₁ of image data of medical image is compared with number of displayable pixels P₂ of image displaying apparatus 3 connected to communication network N in step S5. When the image displaying apparatus 3 having a condition of P₁ > P₂ is not in existence, processing in step S6 is conducted. When the image displaying apparatus 3 having a condition of P₁ > P₂ is in existence, subsampling processing is carried out for image data in accordance with number of displayable pixels P₂ of the relevant image displaying apparatus 3 in step S7, and subsampled image data are generated. For example, when image displaying apparatuses 3 in quantity of "n" ("n" represents a positive integer) each having a different number of displayable pixels P₂ that satisfies P₁ > P₂ are in existence, "n" types of subsampled image data are generated, conforming to each number of displayable pixels P₂. Then, in step S8, subsampled image data thus generated are outputted to image server 5 successively. Processing in each of steps 9, 10 and 12 is the same as one described in Fig. 4, and in step S11, original image data are outputted to image server 5.

With respect to operations of original image data output processing, they are substantially the same as those described with Fig. 5, and the destination of transmission for them is image server 5.

Owing to the structure and operations of the aforesaid variation example, even when image data of medical image need subsampling processing in medical imaging system 200 equipped with image server 5, original image data before subsampling also can be held on medial imaging system 200. As a result, when medical images need to be enlarged and displayed partially for diagnosis, or when a hard copy of images needs to be outputted from image recording apparatus 4 capable of outputting at the same resolution as in the original image of medical images after subsampling processing, for example, it is possible to display medical images and to output hard copies at the resolution identical to that at the time of generation of medical images, by using original image data having no lacks of information.

Further, concerning the original image data which are time-consuming to be transferred, those having no higher priority order for the use are outputted (transferred) when the line of communication network N is not occupied, which eliminates the problem that the line of communication network N is occupied for a long time by the transfer of original image data, and that necessary data transfer is disturbed.

### (Variation 2)

In Variation 2, communication network N of medical imaging system 100 or of medical imaging system 200 is composed of plural (two in this case) lines each having a different data communicating speed.

For example, communication network N is composed of the first LAN line through which the data are transmitted at 100 Mbps and the second LAN line through which the data are transmitted at 1 Gbps.

In Variation 2, when subsampled image data are outputted to image displaying apparatus 3 or to image server 5 from image processing apparatus 2, the image data are transferred through the first LAN line. When original image data are outputted to image displaying apparatus 3 or to image server 5 from image processing apparatus 2, the image data are transferred through the second LAN line having a relatively high communication speed.

By constructing communication network N to include plural different lines as stated above, and by transferring original image data through the line which is different from a line for transferring subsampled data and is higher in terms of data communication speed, original image data can be outputted at high speed without affecting the output of subsampled image data.

Incidentally, the contents of the descriptions in Variations 1 and 2 of the aforesaid embodiment are suitable examples of medical imaging systems 100 and 200, to which, however, the invention is not limited.

Even for the detailed structures and detailed operations of each apparatus constituting each of medical imaging systems 100 and 200, they can be varied without departing from the spirit and scope of the invention.

## Claims

1. A medical imaging system comprising:
an image generating apparatus for photographing a subject and for generating medical image data;
an image processing apparatus for conducting image processing on the generated medical image data and for outputting the processed medical image data; and
an image output apparatus for reproducing and outputting the medical image data subjected to the image processing as a visible image,
wherein the image generating apparatus, the image processing apparatus and the image output apparatus are connected to each other through a communication network, and
wherein the image processing apparatus conducts subsampling processing on the medical image data in accordance with the number of pixels of image data which can be outputted by the image output apparatus, and outputs subsampled image data subjected to the subsampling processing and original image data before subsampling, so as to store the subsampled image data and the original image data in the system.

2. The medical imaging system of claim 1,
wherein the image processing apparatus outputs the subsampled image data and the original image data before subsampling to the image output apparatus, and
wherein the image output apparatus comprises:
an image data storing device for storing the subsampled image data and the original image data.

3. The medical imaging system of claim 1, further comprising:
an image control apparatus for storing and controlling the medical image data subjected to image processing, the image control apparatus being connected to the communication network,
wherein the image processing apparatus outputs the subsampled image data and the original image data before subsampling to the image control apparatus, and the image control apparatus stores and controls the subsampled image data and the original image data.

4. The medical imaging system of claim 1,
wherein the image processing apparatus determines timing to output the original image data in accordance with at least one of a state of use of a line of the communication network and a priority order of use of the original image data.

5. The medical imaging system of claim 1,
wherein the image processing apparatus and the image output apparatus are connected by two or more lines each having a different data communication speed, and the image processing apparatus outputs the original image data to the image output apparatus by using a line whose data communication speed is relatively high among the two or more lines each having a different data communication speed, and outputs the subsampled image data to the image output apparatus by using another line.

6. The medical imaging system of claim 3,
wherein the image processing apparatus and the image control apparatus are connected by two or more lines each having a different data communication speed, and the image processing apparatus outputs the original image data to the image control apparatus by using a line whose data communication speed is relatively high among the two or more lines each having a different data communication speed, and outputs the subsampled image data to the image control apparatus by using another line.
